# EUROPEAN PATENT APPLICATION

(11) **EP 4 425 691 A1**
(43) Date of publication of application: **04.09.2024**
(21) Application number: 22947439.0
(22) Date of filing: 24.06.2022
(51) Int. Cl.: H01M 50/593

(54) **BATTERY CELL, BATTERY AND ELECTRIC DEVICE**

(71) Applicant: Contemporary Amperex Technology Co., Limited, Ningde, Fujian 352100 (CN)
(72) Inventor: LIN, Denghua, Ningde, Fujian 352100 (CN); CHEN, Long, Ningde, Fujian 352100 (CN); CHEN, Xinxiang, Ningde, Fujian 352100 (CN); ZHENG, Yulian, Ningde, Fujian 352100 (CN); JIN, Haizu, Ningde, Fujian 352100 (CN); WANG, Peng, Ningde, Fujian 352100 (CN); HUANG, Shoujun, Ningde, Fujian 352100 (CN)
(74) Representative: Gong, Jinping
(86) International application number: PCT/CN2022/101318
(87) International publication number: WO 2023/245673

(57) **Abstract**

The present application provides a battery cell, a battery, and an electrical device, belonging to the field of battery technologies. The battery cell includes a shell, an electrode assembly, and a first insulating member. The shell has a wall. The electrode assembly is accommodated in the shell and includes a main body and a tab. The tab protrudes from one end of the main body in a thickness direction of the wall. The first insulating member is accommodated in the shell, the first insulating member includes an insulating body and a limit portion, the insulating body is disposed between the wall and the electrode assembly in the thickness direction of the wall, the limit portion is connected to the insulating body, and at least a portion of the limit portion is located between the main body and the shell in a first direction, where the first direction is perpendicular to the thickness direction of the wall. By extending the limit portion between the shell and the main body in the thickness direction of the wall, the limit portion can limit the main body in the first direction, thereby reducing movement of the electrode assembly in the first direction to reduce a risk of collision between the electrode assembly and the shell.

## Description

### Technical Field

The present application relates to the field of battery technologies, and in particular, to a battery cell, a battery, and an electrical device.

### Background Art

In recent years, new energy vehicles have developed with a great leap. In the field of electric vehicles, power batteries play an irreplaceable and important role as power sources of the electric vehicles. With the vigorous promotion of new energy vehicles, the demand for power battery products is increasing. As a core component of new energy vehicles, batteries are highly required in terms of service performance, service safety, or the like. A battery cell of a battery is obtained by assembling a positive electrode plate, a negative electrode plate, and a separator into an electrode assembly (bare cell) in a winding or laminating manner, then putting the bare cell into a shell body, closing the bare cell with an end cover, and injecting an electrolytic solution. However, the service environment of the battery cell is relatively complex, and the electrode assembly often moves within the shell body when the battery cell is used in the prior art. As a result, the electrode assembly is prone to damage and poses great safety hazards, the service life of the battery cell is shortened, and the service safety of the battery cell is poor.

### Summary

Embodiments of the present application provide a battery cell, a battery, and an electrical device to effectively improve the service life and safety of the battery cell.

In a first aspect, an embodiment of the present application provides a battery cell, including a shell, an electrode assembly, and a first insulating member, where the shell has a wall; the electrode assembly is accommodated in the shell, the electrode assembly includes a main body and a tab, and the tab protrudes from one end of the main body in a thickness direction of the wall; and the first insulating member is accommodated in the shell, the first insulating member includes an insulating body and a limit portion, the insulating body is disposed between the wall and the electrode assembly in the thickness direction of the wall to insulate the wall and the electrode assembly, the limit portion is connected to the insulating body, and at least a portion of the limit portion is located between the main body and the shell in a first direction, where the first direction is perpendicular to the thickness direction of the wall.

In the foregoing technical solution, the first insulating member disposed inside the shell is equipped with the insulating body and the limit portion, the limit portion is connected to the insulating body, and the insulating body is disposed between the electrode assembly and the wall of the shell in the thickness direction of the wall to insulate the wall and the electrode assembly, so as to reduce a risk of short-circuiting in the battery cell. Moreover, the limit portion connected to the insulating body extends between the shell and the main body of the electrode assembly in the thickness direction of the wall, and at least a portion of the limit portion is located between the shell and the main body in the first direction, so that the limit portion can play a certain limiting role on the main body of the electrode assembly in the first direction, which can effectively reduce movement of the electrode assembly in the first direction perpendicular to the thickness direction of the wall during use to reduce the risk of collision between the electrode assembly and the shell, and can then alleviate damage of the electrode assembly or greater safety hazards, thereby improving the service life and safety of the battery cell.

In some embodiments, the shell includes a shell and an end cover; the shell has an opening; the end cover is closed to the opening, an electrode terminal is disposed on the end cover, and the electrode terminal is electrically connected to the tab; and the wall is the end cover.

In the foregoing technical solution, the shell is equipped with the shell body and the end cover, and the wall of the shell is the end cover, that is, the insulating body of the first insulating member is disposed between the end cover and the electrode assembly, and the limit portion of the first insulating member can extend between the shell body and the main body of the electrode assembly in the thickness direction of the end cover, so as to insulate the end cover and the electrode assembly. On the other hand, the insulating body limits the main body of the electrode assembly in the thickness direction of the end cover, and the limit portion can also play a certain limiting role on the main body of the electrode assembly in the first direction, so as to effectively reduce movement of the electrode assembly in the direction perpendicular to the thickness direction of the end cover during use, alleviate the risk of collision between the electrode assembly and the end cover, reduce the risk of collision between the electrode assembly and the shell body, and improve the service life and safety of the battery cell accordingly.

In some embodiments, in the thickness direction of the wall, the insulating body has a first abutting surface that abuts against at least a portion of the main body on a side away from the wall, and the limit portion extends between the main body and the shell from the first abutting surface away from the wall.

In the foregoing technical solution, the insulating body is formed with the first abutting surface that abuts against at least a portion of the main body on the side away from the wall in the thickness direction of the wall, and the main body can abut against the insulating body to limit the main body in the thickness direction of the wall, so as to effectively reduce movement of the electrode assembly in the thickness direction of the wall during use and improve the service life and safety of the battery cell. Moreover, the limit portion extends between the main body and the shell from the first abutting surface away from the wall, that is, the limit portion protrudes from the first abutting surface. The first insulating member with this structure is easy to manufacture and beneficial to reducing manufacturing difficulty.

In some embodiments, the first abutting surface is provided with an accommodating groove for accommodating the tab.

In the foregoing technical solution, the accommodating groove is formed on the first abutting surface of the insulating body, that is, the accommodating groove is formed on a side, facing the main body, of the insulating body in the thickness direction of the wall, so that the tab can be accommodated in the accommodating groove. The first insulating member with this structure facilitates the connection of the tab with the electrode terminal disposed on the shell, and can protect the tab to some extent to reduce the risk of damage of the tab by squeezing of the first insulating member.

In some embodiments, the battery cell is of a square structure, and the first direction is a length direction of the wall.

In the foregoing technical solution, the battery cell is of a square structure, and the first direction is the length direction of the wall, that is, due to a large gap between the electrode assembly and the shell in the length direction of the wall, limiting the electrode assembly in the first direction by the limit portion can effectively alleviate movement of the electrode assembly, so as to better protect the electrode assembly.

In some embodiments, the first insulating member includes two limit portions; and the two limit portions are located on two sides of the main body respectively in the first direction.

In the foregoing technical solution, the insulating body is connected with two limit portions, and the two limit portions are disposed on two sides of the main body of the electrode assembly respectively in the first direction, so that the main body of the electrode assembly is located between the two limit portions in the first direction, thereby further improving the limiting effect of the first insulating member on the electrode assembly, to reduce the risk of collision between the electrode assembly and the shell.

In some embodiments, the limit portion abuts against the main body in the first direction.

In the foregoing technical solution, as the limit portion abuts against the main body, the distance between the main body and the limit portion in the first direction can be effectively shortened, which can well limit the electrode assembly and further alleviate the movement of the electrode assembly during use.

In some embodiments, in the first direction, the main body has an end face, the limit portion has a second abutting surface that fits at least a portion of the end face, and the second abutting surface abuts against the end face.

In the foregoing technical solution, the limit portion has the second abutting surface that abuts against the end face of the main body, and the shape of the second abutting surface fits that of at least a portion of the end face of the main body, so that the second abutting surface can mate with at least the portion of the end face of the main body, thereby effectively increasing the contact area between the limit portion and the main body to alleviate stress concentration between the main body and the limit portion, and reducing the risk of partial lithium evolution or damage of the electrode assembly during use.

In some embodiments, both the end face and the second abutting surface are arc surfaces, and the entire limit portion is located between the shell and the end face in the first direction.

In the foregoing technical solution, both the second abutting surface of the limit portion and the end face of the main body are arc surfaces, which increases the contact area between the limit portion and the main body and improves the structural stability between the limit portion and the main body, thereby improving the service performance of the battery cell. In addition, the battery cell with such a structure can further limit and stabilize the electrode assembly in a second direction perpendicular to the thickness direction of the wall and the first direction. Moreover, the entire limit portion is disposed between the shell and the end face, to alleviate extension of the limit portion between the main body and the shell in the second direction perpendicular to the thickness direction of the wall and the first direction, thereby saving the internal space of the battery cell to increase energy density of the battery cell.

In some embodiments, the battery cell includes a plurality of electrode assemblies, and the plurality of electrode assemblies are laminated in a second direction, where the first direction, the second direction, and the thickness direction of the wall are perpendicular to each other; and the limit portion has a plurality of second abutting surfaces arranged in the second direction, and each of the second abutting surfaces abuts against the end face of one main body.

In the foregoing technical solution, the battery cell is equipped with a plurality of electrode assemblies arranged in the second direction, and the limit portion has a plurality of second abutting surfaces arranged in the second direction, so that each second abutting surface can abut against at least a portion of the end face of one main body, which enables the limit portion to fit the main bodies of the plurality of electrode assemblies, to ensure the contact area between the limit portion and the main bodies of the plurality of electrode assemblies, thereby increasing the energy density of the battery cell and effectively reducing the risk of collision between the plurality of electrode assemblies and the shell.

In some embodiments, in the thickness direction of the wall, the portion of the limit portion extending between the main body and the shell has a length of Li, and the main body has a length of L₂, satisfying L₁ ≥ 0.05 × L₂.

In the foregoing technical solution, the length of the portion of the limit portion extending between the main body and the shell in the thickness direction of the wall is greater than or equal to 5% of the length of the main body in the thickness direction of the wall, which can alleviate too small contact area between the limit portion and the main body due to too short limit portion, thereby reducing stress concentration between the limit portion and the main body and reducing the risk of partial lithium evolution in the electrode assembly during use.

In some embodiments, in the first direction, a maximum thickness of the limit portion is D₁, satisfying D₁ ≤ 50 mm.

In the foregoing technical solution, the maximum thickness of the limit portion in the first direction is less than or equal to 50 mm, which alleviates excessive space occupation by the limit portion due to the excessive thickness of the limit portion, thereby improving space utilization of the electrode assembly in the shell to ensure the energy density of the battery cell.

In some embodiments, in the first direction, a minimum thickness of the limit portion is D₂, satisfying 0.05 mm ≤ D₂ ≤ 2 mm.

In the foregoing technical solution, the minimum thickness of the limit portion in the first direction to 0.05 mm to 2 mm, which can reduce the phenomenon of low structural strength of the limit portion due to too small thickness of the limit portion to reduce the risk of fracture of the limit portion during use, and can alleviate the phenomenon of low space utilization of the electrode assembly in the shell due to too large thickness of the limit portion to reduce the impact of the limit portion on the energy density of the battery cell.

In some embodiments, in the first direction, a minimum distance between the main body and the shell is D₃, and the minimum thickness of the limit portion is D₂, satisfying 0.05 × D₃ ≤ D₂ ≤ 0.95 × D₃.

In the foregoing technical solution, the minimum thickness of the limit portion in the first direction is 5% to 95% of the minimum distance between the main body and the shell in the first direction, that is, the limit portion occupies 5% to 95% of the minimum gap between the main body and the shell in the first direction, thereby ensuring the structural strength of the limit portion to reduce the risk of fracture of the limit portion during use, alleviating the phenomenon of mutual scratch between the limit portion and the shell when the first insulating member is assembled to the shell due to excessive space occupation by the limit portion, and then reducing the assembly difficulty of the battery cell.

In some embodiments, the battery cell further includes a second insulating member; the second insulating member is wrapped on an outer side of the main body to insulate the main body from the shell; and in the first direction, the portion of the limit portion between the main body and the shell is disposed between the second insulating member and the main body.

In the foregoing technical solution, by wrapping the second insulating member on the outer side of the main body, the second insulating member can insulate the main body and the shell to some extent, thereby achieving insulation between the main body and the shell. Moreover, the portion of the limit portion extending between the main body and the shell is disposed between the second insulating member and the main body, that is, the second insulating member is wrapped on the outer side of the limit portion, which improves the structural stability between the limit portion and the main body, and facilitates simultaneous assembly of the electrode assembly and the first insulating member into the shell to improve the assembly efficiency of the battery cell.

In a second aspect, an embodiment of the present application further provides a battery, including a plurality of foregoing battery cells.

In a third aspect, an embodiment of the present application further provides an electrical device, including the foregoing battery.

### Brief Description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art without any creative efforts.
FIG. 1 is a schematic structural diagram of a vehicle provided by some embodiments of the present application;
FIG. 2 is a structural exploded view of a battery provided by some embodiments of the present application;
FIG. 3 is a schematic structural diagram of a battery cell provided by some embodiments of the present application;
FIG. 4 is a structural exploded view of a battery cell provided in some embodiments of the present application;
FIG. 5 is a schematic structural diagram of a first insulating member provided by some embodiments of the present application;
FIG. 6 is a cross-sectional view of a battery cell provided by some embodiments of the present application;
FIG. 7 is a partially enlarged view of part A of the battery cell shown in FIG. 6;
FIG. 8 is a schematic diagram of connection between a first insulating member and an electrode assembly according to some embodiments of the present application;
FIG. 9 is a partial cross-sectional view of the battery cell perpendicular to a thickness direction of a wall according to some embodiments of the present application;
FIG. 10 is a partial cross-sectional view of the battery cell perpendicular to the thickness direction of the wall according to other embodiments of the present application;
FIG. 11 is a schematic diagram of connection between the first insulating member and the electrode assembly according to other embodiments of the present application;
FIG. 12 is a partial cross-sectional view of the battery cell perpendicular to the thickness direction of the wall according to other embodiments of the present application; and
FIG. 13 is a partial cross-sectional view of the battery cell perpendicular to the thickness direction of the wall according to still other embodiments of the present application.

Reference numerals: 1000 - vehicle; 100 - battery; 10 - box; 11 - first box body; 12 - second box body; 20 - battery cell; 21 - shell; 211 - opening; 22 - end cover; 23 - electrode assembly; 231 - main body; 2311 - end face; 232 - tab; 24 - first insulating member; 241 - insulating body; 2411 - through hole; 2412 - first abutting surface; 2413 - accommodating groove; 242 - limit portion; 2421 - second abutting surface; 25 - electrode terminal; 26 - pressure relief mechanism; 27 - second insulating member; 200 - controller; 300 - motor; X - thickness direction of the wall; Y - first direction; Z - second direction.

### Detailed Description of Embodiments

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the accompanying drawings, and any variations thereof, are intended to cover non-exclusive inclusion. The terms "first", "second", and the like in the specification and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment may be included in at least one embodiment of the present application. The phrase at various locations in the specification does not necessarily refer to the same embodiment, or an independent or alternative embodiment exclusive of another embodiment.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or a communication of interiors of two elements. Those of ordinary skill in the art may understand the specific meanings of the above terms in the present application according to specific circumstances.

The term "and/or" in the present application is merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two (inclusive) or more.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, square battery cells and soft package battery cells, which are also not limited in the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box used for packaging one or more battery cells or a plurality of battery modules. The box may prevent liquid or other foreign matters from affecting charging or discharging of the battery cells.

The battery cell includes a shell, an electrode assembly, and an electrolytic solution, where the shell is used for accommodating the electrode assembly and the electrolytic solution. The electrode assembly consists of a positive electrode plate, a negative electrode plate, and a separator. The battery cell mainly relies on migration of metal ions between the positive electrode plate and the negative electrode plate to work. The positive electrode plate includes a positive electrode current collector and a positive electrode active material layer, a surface of the positive electrode current collector is coated with the positive electrode active material layer, and a portion, not coated with the positive electrode active material layer, of the positive electrode current collector serves as a positive electrode tab to input or output electrical energy of the positive electrode plate. In an example of a lithium-ion battery, a material of the positive electrode current collector may be aluminum, and a positive electrode active material may be lithium cobaltate, lithium iron phosphate, ternary lithium, lithium manganate, or the like. The negative electrode plate includes a negative electrode current collector and a negative electrode active material layer, a surface of the negative current collector is coated with the negative electrode active material layer, and a portion, not coated with the negative electrode active material layer, of the negative electrode current collector serves as a negative electrode tab to input or output electrical energy of the negative electrode plate. A material of the negative electrode current collector may be copper, and a negative electrode active material may be carbon, silicon, or the like. In order to ensure that no fusing occurs when high current passes through, there is a plurality of positive electrode tabs laminated together, and there is a plurality of negative electrode tabs laminated together.

A material of the separator may be polypropylene (PP), polyethylene (PE), or the like. Moreover, the electrode assembly may be of a wound structure or a laminated structure, and the embodiments of the present application are not limited thereto.

Batteries are an important part of the development of new energy nowadays due to their outstanding advantages such as high energy density, low environmental pollution, high power density, long service life, wide adaptability, and small self-discharge coefficient. A battery cell of a battery is obtained by assembling a positive electrode plate, a negative electrode plate and a separator into an electrode assembly (bare cell) in a winding or laminating manner, then putting the bare cell into a shell body, closing the bare cell with an end cover, and injecting an electrolytic solution. However, with continuous development of battery technologies, higher requirements are put forward for the service life, service safety, and the like of batteries. Therefore, the service life and safety of battery cells determine the performance and safety of batteries.

The inventor found, for the ordinary battery cell, the electrode assembly accommodated in the shell body of the battery cell is required to be connected to an electrode terminal on the end cover to input or output electrical energy of the battery cell. In this case, the electrode assembly is required to be insulated from the end cover to reduce risks of short-circuiting and the like in the battery cell.

In order to solve insulation between the electrode assembly and the end cover to reduce the risk of short-circuiting in the battery cell, a lower plastic is usually disposed on a side, facing the electrode assembly, of the end cover in the prior art to insulate the electrode assembly and the end cover, and the lower plastic can play a certain limiting role on the electrode assembly to prevent the electrode assembly from moving in a thickness direction of the end cover. However, when the battery cell with such a structure is used, the electrode assembly often moves in a direction perpendicular to the thickness direction of the end cover, that is, moves in a length direction of the end cover, to collide with the shell body laterally. As a result, the electrode assembly is prone to damage and poses great safety hazards, the service life of the battery cell is shortened, and the service safety of the battery cell is poor.

Based on the above considerations, in order to solve the problems of short service life and poor service safety of battery cells, the inventor conducted in-depth research and designed a battery cell, including a shell, an electrode assembly, and a first insulating member. The shell has a wall. The electrode assembly is accommodated in the shell and includes a main body and a tab. The tab protrudes from one end of the main body in a thickness direction of the wall. The first insulating member is accommodated in the shell and includes an insulating body and a limit portion. The insulating body is disposed between the wall and the electrode assembly in the thickness direction of the wall to insulate the wall and the electrode assembly. In a first direction, the limit portion is located on one side of the main body, and at least a portion of the limit portion extends between the main body and the shell in the thickness direction of the wall, where the first direction is perpendicular to the thickness direction of the wall.

In the battery cell with such a structure, the first insulating member disposed inside the shell is equipped with the insulating body and the limit portion, the limit portion is connected to the insulating body, and the insulating body is disposed between the electrode assembly and the wall of the shell in the thickness direction of the wall to insulate the wall and the electrode assembly, so as to reduce the risk of short-circuiting in the battery cell. Moreover, the limit portion connected to the insulating body extends between the shell and the main body of the electrode assembly in the thickness direction of the wall, and at least a portion of the limit portion is located between the shell and the main body in the first direction, so that the limit portion can play a certain limiting role on the main body of the electrode assembly in the first direction, which can effectively reduce movement of the electrode assembly in the first direction perpendicular to the thickness direction of the wall during use to reduce the risk of collision between the electrode assembly and the shell, and can then alleviate damage of the electrode assembly or greater safety hazards, thereby improving the service life and safety of the battery cell.

The battery cell disclosed in the embodiments of the present application may be used, but not limited to, in an electrical device such as a vehicle, a ship, or an aircraft. The battery cell, battery, or the like disclosed in the present application may be used to constitute a power supply system of the electrical device, which can effectively reduce the risk of collision between the electrode assembly and the shell body during use, thereby improving the service life and safety of the battery cell.

An embodiment of the present application provides an electrical device using a battery as a power source. The electrical device may be, but is not limited to, a mobile phone, a tablet computer, a notebook computer, an electric toy, an electric tool, a scooter, an electric vehicle, a ship, or a spacecraft. The electric toy may include a fixed or mobile electric toy, such as a game console, an electric car toy, an electric ship toy, or an electric aircraft toy. The spacecraft may include an airplane, a rocket, a space shuttle, a spaceship, or the like.

For convenient description, the following embodiments are described by an example of a vehicle 1000 as an electrical device in an embodiment of the present application.

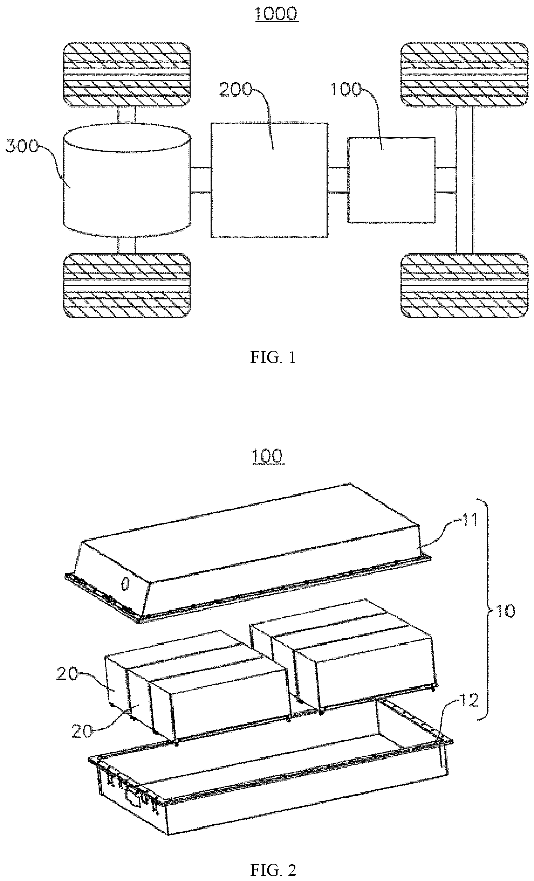

Refer to FIG. 1. FIG. 1 is a schematic structural diagram of a vehicle 1000 provided by some embodiments of the present application. The vehicle 1000 may be a fuel-powered vehicle, a gas-powered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed at a bottom, head or tail of the vehicle 1000. The battery 100 may be used to supply power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

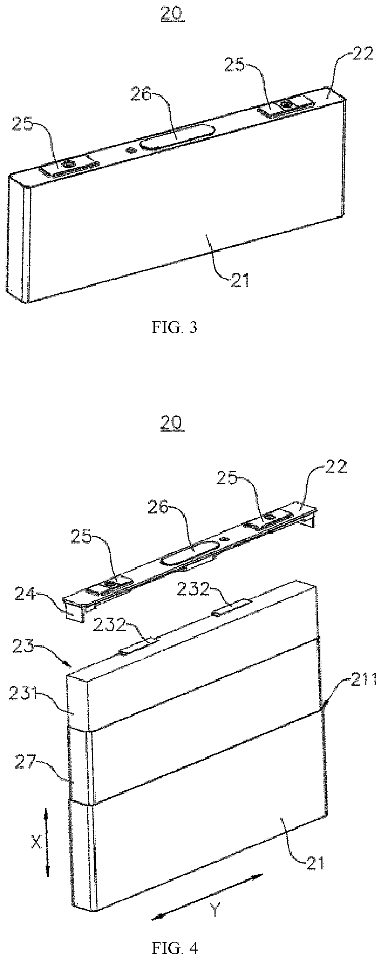

Refer to FIG. 2 and FIG. 3. FIG. 2 is a structural exploded view of a battery 100 provided by some embodiments of the present application, and FIG. 3 is a schematic structural diagram of a battery cell 20 provided by some embodiments of the present application. The battery 100 includes a box 10 and battery cells 20, where the battery cells 20 are accommodated in the box 10. The box 10 is used for providing an assembly space for the battery cells 20, and the box 10 may have many structures. In some embodiments, the box 10 may include a first box body 11 and a second box body 12, the first box body 11 and the second box body 12 cover each other, and the first box body 11 and the second box body 12 jointly confine the assembly space for accommodating the battery cells 20. The second box body 12 may be of a hollow structure with an open end, the first box body 11 may be of a plate-like structure, and the first box body 11 covers an open side of the second box body 12, so that the first box body 11 and the second box body 12 jointly confine the assembly space; or each of the first box body 11 and the second box body 12 may be of a hollow structure with an open side, and the open side of the first box body 11 covers the open side of the second box body 12. Of course, the box 10 formed by the first box body 11 and the second box body 12 may be in various shapes, such as cylindrical or cuboid.

There may be a plurality of battery cells 20 in the battery 100, and the plurality of battery cells 20 may be in series connection, parallel connection, or series-parallel connection. The series-parallel connection refers to a combination of series connection and parallel connection in the plurality of battery cells 20. The plurality of battery cells 20 may be directly connected in series, in parallel, or in series and parallel together, and then the whole formed by the plurality of battery cells 20 is accommodated in the box 10. Of course, the battery 100 may alternatively be in a form of a battery module formed by first connecting the plurality of battery cells 20 in series, in parallel, or in series and parallel, and a plurality of battery modules are then connected in series, in parallel, or in series and parallel to form a whole accommodated in the box 10. The battery 100 may further include other structures, for example, the battery 100 may further include a current collecting component for achieving electrical connection between the plurality of battery cells 20.

Each battery cell 20 may be a secondary battery or a primary battery, or may be a lithium-sulfur battery, a sodium-ion battery, or a magnesium-ion battery, but is not limited to this. The battery cell 20 may be cylindrical, flat, cuboid, or in other shapes. For example, in FIG. 2, the battery cell 20 is of a cuboid structure.

In some embodiments, the battery cell 20 may include a shell body 21, an end cover 22, and an electrode assembly 23. The end cover 22 covers the shell body 21, so that the shell body 21 and the end cover 22 jointly confine a shell for accommodating the electrode assembly 23.

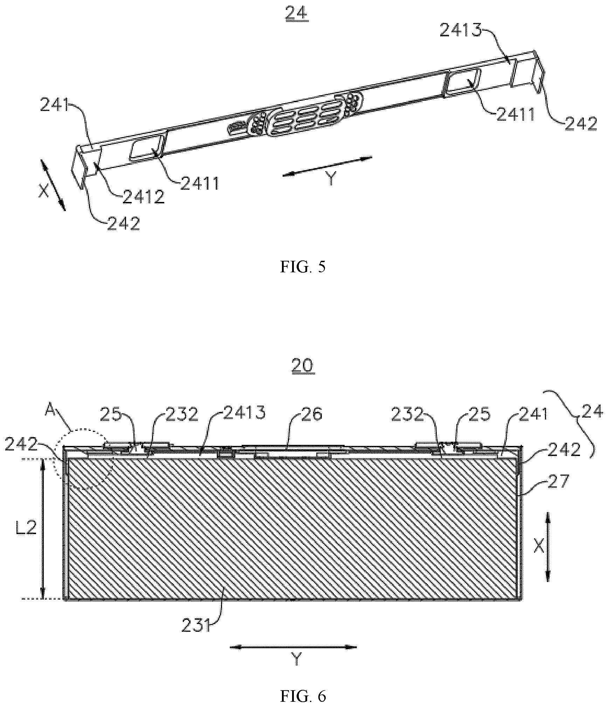

According to some embodiments of the present application, refer to FIG. 3, and further refer to FIGs. 4, 5, and 6. FIG. 4 is a structural exploded view of the battery cell 20 provided by some embodiments of the present application, FIG. 5 is a schematic structural diagram of a first insulating member 24 provided by some embodiments of the present application, and FIG. 6 is a cross-sectional view of the battery cell 20 provided by some embodiments of the present application. The present application provides a battery cell 20. The battery cell 20 includes a shell, an electrode assembly 23, and a first insulating member 24. The shell has a wall. The electrode assembly 23 is accommodated in the shell, the electrode assembly 23 includes a main body 231 and a tab 232, and the tab 232 protrudes from one end of the main body 231 in a thickness direction X of the wall. The first insulating member 24 is accommodated in the shell, the first insulating member 24 includes an insulating body 241 and a limit portion 242, the insulating body 241 is disposed between the wall and the electrode assembly 23 in the thickness direction X of the wall to insulate the wall and the electrode assembly 23, the limit portion 242 is connected to the insulating body 241, and at least a portion of the limit portion 242 is located between the main body 231 and the shell in a first direction Y, where the first direction Y is perpendicular to the thickness direction X of the wall.

The shell serves to accommodate the electrode assembly 23, and of course, the shell may also be used for accommodating an electrolyte, such as an electrolytic solution. The shell may include a shell body 21 and an end cover 22, the shell body 21 is of a hollow structure with an opening 211 on one side, and the end cover 22 covers the opening 211 of the shell body 21 to form a sealed connection, so as to form a sealed space for accommodating the electrode assembly 23 and the electrolyte. The wall of the shell may be either the shell body 21 or the end cover 22.

The insulating body 241 is disposed between the wall and the electrode assembly 23 to insulate the wall and the electrode assembly 23, that is, the insulating body 241 is used for separating the wall and the electrode assembly 23, so that the wall and the electrode assembly 23 are not electrically connected. Optionally, the wall may be either the end cover 22 or a side wall or bottom wall of the shell body 21. For example, in FIG. 6, the wall is the end cover 22, that is, the insulating body 241 of the first insulating member 24 is disposed between the end cover 22 and the electrode assembly 23 in the thickness direction X of the wall. When the wall is the bottom wall of the shell body 21, that is, the insulating body 241 of the first insulating member 24 is disposed between the bottom wall of the shell body 21 and the electrode assembly 23 in the thickness direction X of the wall, and the insulating body 241 of the first insulating member 24 is disposed on a side, away from the end cover 22, of the electrode assembly 23 in the thickness direction X of the wall.

For example, in FIG. 6, the battery cell 20 is of a cuboid structure, the thickness direction X of the wall is a thickness direction of the end cover 22 and a height direction of the battery cell 20, and the first direction Y is a length direction of the battery cell 20 and a length direction of the end cover 22. Alternatively, in other embodiments, the battery cell 20 may be of a cylindrical structure, and the first direction Y is a radial direction of the battery cell 20.

At least a portion of the limit portion 242 is located between the main body 231 and the shell, that is, the limit portion 242 is located on one side of the main body 231 of the electrode assembly 23 in the first direction Y, and at least a portion of the limit portion 242 extends between the main body 231 and the shell in the thickness direction X of the wall, where in the thickness direction X of the wall, the limit portion 242 may partially extend between the main body 231 and the shell or fully extend between the main body 231 and the shell.

It should be noted that the electrode assembly 23 is a component that undergoes electrochemical reactions in the battery cell 20. The electrode assembly 23 may include a positive electrode plate, a negative electrode plate, and a separator. The electrode assembly 23 may be of a wound structure formed by winding the positive electrode plate, the separator, and the negative electrode plate, or a laminated structure formed by laminating the positive electrode plate, the separator, and the negative electrode plate. For example, in FIG. 4, the electrode assembly 23 is of a wound structure formed by winding the positive electrode plate, the separator, and the negative electrode plate. In the embodiments of the present application, one or more electrode assemblies 23 may be accommodated in the shell body 21. For example, in FIG. 4, one electrode assembly 23 is configured.

The insulating body 241 is disposed between the electrode assembly 23 and the wall of the shell in the thickness direction X of the wall to insulate the wall and the electrode assembly 23, so as to achieve insulation between the electrode assembly 23 and the wall and reduce the risk of short-circuiting in the battery cell 20. Moreover, the limit portion 242 connected to the insulating body 241 extends between the shell and the main body 231 of the electrode assembly 23 in the thickness direction X of the wall, and at least a portion of the limit portion 242 is located between the shell and the main body 231 in the first direction Y, so that the limit portion 242 can play a certain limiting role on the main body 231 of the electrode assembly 23 in the first direction Y, which can effectively reduce movement of the electrode assembly 23 in the first direction Y during use to reduce the risk of collision between the electrode assembly 23 and the shell, and can then alleviate damage of the electrode assembly 23 or greater safety hazards, thereby improving the service life and safety of the battery cell 20.

In some embodiments, as shown in FIGs. 3, 4, and 6, the shell includes a shell body 21 and an end cover 22, the shell body 21 has an opening 211, the end cover 22 is closed to the opening 211, an electrode terminal 25 is disposed on the end cover 22, the electrode terminal 25 is electrically connected to the tab 232, and the wall is the end cover 22.

The wall is the end cover 22, that is, the thickness direction X of the wall is the thickness direction of the end cover\, the insulating body 241 of the first insulating member 24 is disposed between the end cover 22 and the electrode assembly 23 in the thickness direction X of the wall, and the limit portion 242 extends between the shell body 21 and the main body 231 of the electrode assembly 23 in the thickness direction X of the wall, so that at least a portion of the limit portion 242 is located between the main body 231 and the shell body 21 in the first direction Y.

Optionally, the shell body 21 may be in various structural forms. Materials of the shell body 21 and the end cover 22 may be various, such as copper, iron, aluminum, steel, or aluminum alloy.

When the battery cell 20 is assembled, the electrode assembly 23 is first put into the shell body 21, the shell body 21 is filled with an electrolyte, and then the cover body 22 is closed to the opening 211 of the shell body 21 to form a sealed connection, so as to form a sealed space for accommodating the electrode assembly 23 and the electrolyte. For example, the end cover 22 is welded to the shell body 21.

The shell body 21 may be in various shapes, such as cylindrical or cuboid. The shape of the shell body 21 may be determined according to a specific shape of the electrode assembly 23. For example, if the electrode assembly 23 is of a cylindrical structure, the shell body may be of a cylindrical structure; or if the electrode assembly 23 is of a cuboid structure, the shell body may be of a cuboid structure. For example, in FIG. 4, the electrode assembly 23 is of a cuboid structure, and the shell body 21 is of a cuboid structure. Alternatively, the end cover 22 may be of various structures. For example, the end cover 22 is of a plate-like structure or a hollow structure with an open end. For example, in FIG. 4, the shell body 21 is of a cuboid structure, the end cover 22 is of a cuboid structure, and the end cover 22 is closed to the opening 211 of the shell body 21.

In some embodiments, the battery cell 20 is equipped with two electrode terminals 25, as shown in FIG. 3 and FIG. 4, the two electrode terminals 25 are a positive electrode terminal and a negative electrode terminal respectively, and both the positive electrode terminal and the negative electrode terminal are mounted on the end cover 22 in an insulated manner, that is, neither the positive electrode terminal nor the negative electrode terminal is electrically connected to the end cover 22. The electrode assembly 23 has two tabs 232 (namely, a positive electrode tab and a negative electrode tab), and the two tabs 232 may be located at the same end of the main body 231 in the thickness direction X of the wall, or at two ends of the main body 231 in the thickness direction X of the wall. For example, in FIG. 4, the two tabs 232 protrude from an end, near the end cover 22, of the main body 231 in the thickness direction X of the wall. The positive electrode terminal and the negative electrode terminal are connected to the positive electrode tab and the negative electrode tab of the electrode assembly 23 respectively to serve as a positive output electrode and a negative output electrode of the battery cell 20.

Optionally, the battery cell 20 may further include a pressure relief mechanism 26, and the pressure relief mechanism 26 is mounted on the end cover 22. The pressure relief mechanism 26 is used for releasing pressure inside the battery cell 20 when the internal pressure or temperature of the battery cell 20 reaches a predetermined value.

For example, as shown in FIG. 3 and FIG. 4, the two electrode terminals 25 (that is, the positive electrode terminal and the negative electrode terminal) are spaced in the length direction (namely, the first direction Y) of the end cover 22, and the pressure relief mechanism 26 is located between the two electrode terminals 25. The pressure relief mechanism 26 may be a component such as an explosion-proof valve, a rupture disc, a gas valve, a pressure relief valve, or a safety valve.

With reference to FIG. 5 and FIG. 6, the insulating body 241 is provided with two through holes 2411, the two through holes 2411 are spaced in the length direction (namely, the first direction Y) of the end cover 22, and the through holes 2411 run through two sides of the insulating body 241 in the thickness direction X of the wall. One electrode terminal 25 passes through each through hole 2411, so that the electrode terminal 25 can be connected to the corresponding tab 232.

Understandably, the battery cell 20 is not limited to the above structure. The battery cell 20 may alternatively be of other structures. For example, the battery cell 20 includes a shell body 21 and two end covers 22, the shell body 21 is of a hollow structure with openings 211 at two opposite ends, and one end cover 22 is correspondingly closed to one opening 211 of the shell body 21 to form a sealed connection, so as to form a sealed space for accommodating the electrode assembly 23 and the electrolyte. In this structure, the two electrode terminals 25 (namely, the positive electrode terminal and the negative electrode terminal) may be mounted on the same end cover 22 or on different end covers 22. When the two electrode terminals 25 are mounted on different end covers 22, the two tabs 232 of the electrode assembly 23 are located at two ends of the electrode assembly 23 in the thickness direction X of the wall, respectively. Similarly, the pressure relief mechanism 26 may be mounted on one end cover 22, or the pressure relief mechanism 26 may be mounted on each of the two end covers 22.

The shell is equipped with the shell body 21 and the end cover 22, and the wall of the shell is the end cover 22, that is, the insulating body 241 of the first insulating member 24 is disposed between the end cover 22 and the electrode assembly 23, and the limit portion 242 of the first insulating member 24 can extend between the shell body 21 and the main body 231 of the electrode assembly 23 in the thickness direction of the end cover 22, which can insulate the end cover 22 and the electrode assembly 23, thereby achieving insulation between the electrode assembly 23 and the end cover 22. On the other hand, the insulating body 241 limits the main body 231 of the electrode assembly 23 in the thickness direction of the end cover 22, and the limit portion 242 can also play a certain limiting role on the main body 231 of the electrode assembly 23 in the first direction Y, so as to effectively reduce movement of the electrode assembly 23 in the direction perpendicular to the thickness direction of the end cover 22 during use, alleviate the risk of collision between the electrode assembly 23 and the end cover 22, reduce the risk of collision between the electrode assembly 23 and the shell body 21, and improve the service life and safety of the battery cell 20 accordingly.

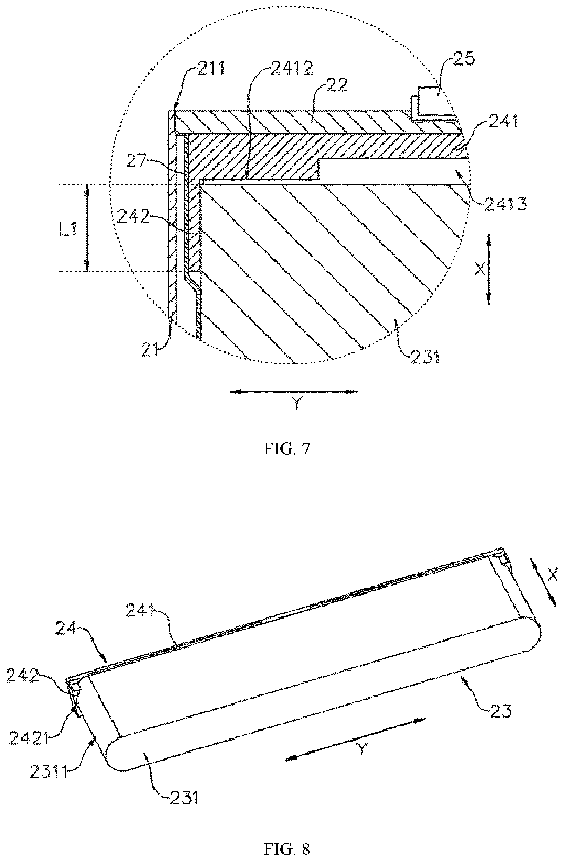

According to some embodiments of the present application, refer to FIG. 5 and FIG. 6, and further refer to FIG. 7. FIG. 7 is a partially enlarged view of part A of the battery cell 20 shown in FIG. 6. In the thickness direction X of the wall, the insulating body 241 has a first abutting surface 2412 that abuts against at least a portion of the main body 231 on a side away from the wall, and the limit portion 242 extends between the main body 231 and the shell from the first abutting surface 2412 away from the wall.

The first abutting surface 2412 is a surface of the insulating body 241 that faces one side of the main body 231 in the thickness direction X of the wall and at least partially abuts against the main body 231, that is, after the assembly of the battery cell 20 is completed, an end, close to the insulating body 241, of the main body 231 in the thickness direction X of the wall abuts against the first abutting surface 2412 of the insulating body 241. The end of the main body 231 in the thickness direction X of the wall may be fully abut against the first abutting surface 2412 or partially abut against the first abutting surface 2412. For example, in FIG. 6 and FIG. 7, the end of the main body 231 in the thickness direction X of the wall partially abuts against the first abutting surface 2412.

The limit portion 242 extends between the main body 231 and the shell from the first abutting surface 2412 away from the wall, namely, the limit portion 242 extends between the main body 231 and the shell body 21 from the first abutting surface 2412 away from the end cover 22. That is, the limit portion 242 protrudes from the first abutting surface 2412 of the insulating body 241 and extends between the main body 231 and the shell body 21 of the shell in the thickness direction X of the wall.

Of course, the structure of the first insulating member 24 is not limited to this. In other embodiments, the limit portion 242 may not be disposed on the first abutting surface 2412 of the insulating body 241, and the limit portion 242 may be connected to one end of the insulating body 241 in the first direction Y and extend between the main body 231 and the shell body 21 of the shell in the thickness direction X of the wall.

The insulating body 241 is formed with the first abutting surface 2412 that abuts against the main body 231 on one side away from the end cover 22 in the thickness direction X of the wall, and the main body 231 can abut against the insulating body 241 to limit the main body 231 in the thickness direction X of the wall, so as to effectively reduce movement of the electrode assembly 23 in the thickness direction X of the wall during use and improve the service life and safety of the battery cell 20. Moreover, the limit portion 242 extends between the main body 231 and the shell body 21 of the shell from the first abutting surface 2412 away from the end cover 22, that is, the limit portion 242 protrudes from the first abutting surface 2412. The first insulating member 24 with this structure is easy to manufacture and beneficial to reducing manufacturing difficulty.

According to some embodiments of the present application, with continued reference to FIGs. 5, 6, and 7, the first abutting surface 2412 is provided with an accommodating groove 2413 for accommodating the tab 232.

The two tabs 232 of the electrode assembly 23 are located at an end, facing the end cover 22, of the main body 231 in the thickness direction X of the wall, so that the two tabs 232 can be accommodated in the accommodating grooves 2413 formed on the first insulator.

In some embodiments, the two through holes 2411 through which the two electrode terminals 25 pass are disposed on bottom walls of the accommodating grooves 2413, so that the tabs 232 can be easily connected to the corresponding electrode terminals 25 after being accommodated in the accommodating grooves 2413.

The accommodating groove 2413 is formed on the first abutting surface 2412 of the insulating body 241, that is, the accommodating groove 2413 is formed on a side, facing the main body 231, of the insulating body 241 in the thickness direction X of the wall, so that the tab 232 can be accommodated in the accommodating groove 2413. The first insulating member 24 with this structure facilitates the connection of the tab 232 with the electrode terminal 25 disposed on the end cover 22 of the shell, and can protect the tab 232 to some extent to reduce the risk of damage of the tab 232 by squeezing of the first insulating member 24.

According to some embodiments of the present application, as shown in FIGs. 4, 5, and 6, the battery cell 20 is of a square structure, and the first direction Y is the length direction of the wall.

The battery cell 20 is cuboid, and the first direction Y is the length direction of the wall, the length direction of the end cover 22, and the length direction of the battery cell 20.

It should be noted that, in some embodiments, the battery cell 20 may alternatively be of other structures. For example, the battery cell 20 is of a cylindrical structure, and the first direction Y is the radial direction of the battery cell 20. When the battery cell 20 is of a cylindrical structure, the limit portion 242 may extend in a circumferential direction of the battery cell 20. That is, the limit portion 242 surrounds the outer side of the main body 231 of the electrode assembly 23 in the circumferential direction of the battery cell 20.

The battery cell 20 is of a square structure, and the first direction Y is the length direction of the wall (the length direction of the end cover 22), that is, due to a large gap between the electrode assembly 23 and the shell body 21 of the shell in the length direction of the end cover 22, limiting the electrode assembly 23 in the first direction Y by the limit portion 242 can effectively alleviate movement of the electrode assembly 23, so as to better protect the electrode assembly 23.

According to some embodiments of the present application, as shown in FIGs. 4, 5, and 6, the first insulating member 24 includes two limit portions 242, and the two limit portions 242 are located on two sides of the main body 231 in the first direction Y, respectively.

In the foregoing description, the first insulating member 24 includes two limit portions 242, namely, the insulating body 241 is connected with two limit portions 242, and the two limit portions 242 are disposed on two sides of the main body 231 in the first direction Y, respectively, that is, the main body 231 is disposed between the two limit portions 242 in the first direction Y.

The insulating body 241 is connected with two limit portions 242, and the two limit portions 242 are disposed on two sides of the main body 231 of the electrode assembly 23 respectively in the first direction Y, so that the main body 231 of the electrode assembly 23 is located between the two limit portions 242 in the first direction Y, thereby further improving the limiting effect of the first insulating member 24 on the electrode assembly 23, to reduce the risk of collision between the electrode assembly 23 and the shell body 21 of the shell.

According to some embodiments of the present application, refer to FIG. 6 and FIG. 7, and further refer to FIG. 8. FIG. 8 is a schematic diagram of connection between the first insulating member 24 and the electrode assembly 23 according to some embodiments of the present application. In the first direction Y, the limit portion 242 abuts against the main body 231.

The limit portion 242 abuts against the main body 231, that is, the limit portion 242 abuts against the main body 231 of the electrode assembly 23 in the first direction Y. Similarly, in an embodiment where the first insulating member 24 has two limit portions 242, the two limit portions 242 are located on two sides of the main body 231 in the first direction Y and abut against two ends of the main body 231, respectively.

As the limit portion 242 abuts against the main body 231, the distance between the main body 231 and the limit portion 242 in the first direction Y can be effectively shortened, which can well limit the electrode assembly 23 and further alleviate the movement of the electrode assembly 23 during use.

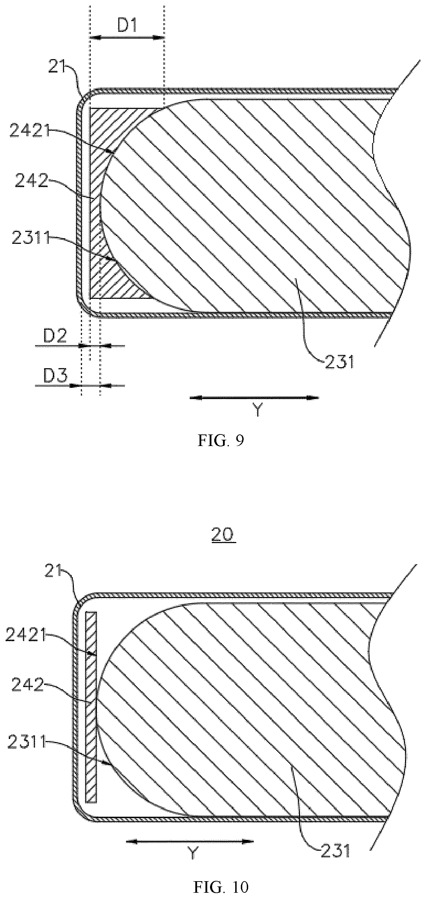

According to some embodiments of the present application, refer to FIG. 8 and further refer to FIG. 9. FIG. 9 is a partial cross-sectional view of the battery cell 20 perpendicular to the thickness direction X of the wall according to some embodiments of the present application. In the first direction Y, the main body 231 has an end face 2311, the limit portion 242 has a second abutting surface 2421 that fits at least a portion of the end face 2311, and the second abutting surface 2421 abuts against the end face 2311.

In the first direction Y, the second abutting surface 2421 of the limit portion 242 fits at least a portion of the end face 2311 of the main body 231, that is, the shape of the second abutting surface 2421 of the limit portion 242 is the same as that of at least a portion of the end face 2311 of the main body 231, and the second abutting surface 2421 of the limit portion 242 mates with the corresponding end face 2311 of the main body 231. It should be noted that the second abutting surface 2421 may fit the entire end face 2311 of the main body 231, that is, the second abutting surface 2421 fully mates with the end face 2311 of the main body 231. Alternatively, the second abutting surface 2421 may fit a portion of the end face 2311 of the main body 231. For example, in FIG. 9, the second abutting surface 2421 mates with a portion of the end face 2311 of the main body 231.

Optionally, in FIG. 9, both the end face 2311 and the second abutting surface 2421 are arc surfaces, and the entire limit portion 242 is located between the shell body 21 of the shell and the end face 2311 in the first direction Y. That is, the end face 2311 and the second abutting surface 2421 are arc surfaces in the same shape, and the limit portion 242 is fully accommodated in a space jointly confined by the shell body 21 of the shell and the end face 2311 of the main body 231 in the first direction Y. Both the second abutting surface 2421 of the limit portion 242 and the end face 2311 of the main body 231 are arc surfaces, which increases the contact area between the limit portion 242 and the main body 231 and improves the structural stability between the limit portion 242 and the main body 231, thereby improving the service performance of the battery cell 20. In addition, the battery cell 20 with such a structure can further limit and stabilize the electrode assembly 23 in a second direction Z perpendicular to the thickness direction X of the wall and the first direction Y. Moreover, the entire limit portion 242 is disposed between the shell body 21 of the shell and the end face 2311, to alleviate extension of the limit portion 242 between the main body 231 and the shell body 21 of the shell in the second direction Z perpendicular to the thickness direction X of the wall and the first direction Y, thereby saving the internal space of the battery cell 20 to increase energy density of the battery cell 20.

It should be noted that, in some embodiments, refer to FIG. 10, where FIG. 10 is a partial cross-sectional view of the battery cell 20 perpendicular to the thickness direction X of the wall according to some embodiments of the present application, the second abutting surface 2421 of the limit portion 242 may not fit the end face 2311 of the main body 231, and at least a portion of the second abutting surface 2421 of the limit portion 242 abuts against the end face 2311 of the main body 231. For example, in FIG. 10, the limit portion 242 is of a flat plate structure, and a side, facing the main body 231, of the limit portion 242 in the first direction Y abuts against the end face 2311 of the main body 231.

The limit portion 242 has the second abutting surface 2421 that abuts against the end face 2311 of the main body 231, and the shape of the second abutting surface 2421 fits that of at least a portion of the end face 2311 of the main body 231, so that the second abutting surface 2421 can mate with at least the portion of the end face 2311 of the main body 231, thereby effectively increasing the contact area between the limit portion 242 and the main body 231 to alleviate stress concentration between the main body 231 and the limit portion 242, and reducing the risk of partial lithium evolution or damage of the electrode assembly 23 during use.

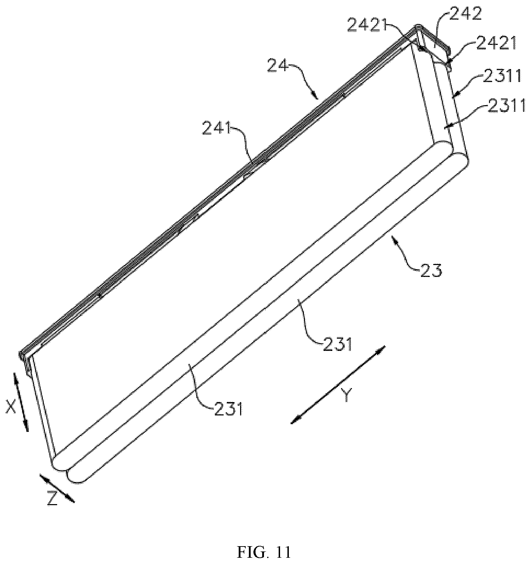

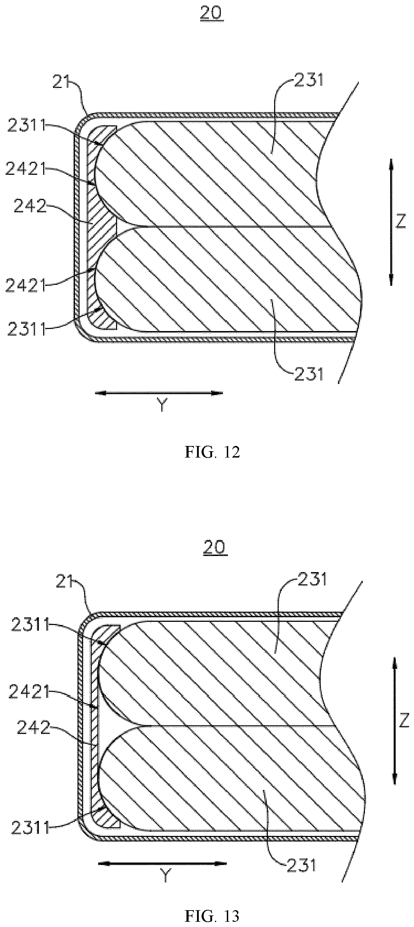

In some embodiments, one or more electrode assemblies 23 may be accommodated in the shell body 21. For example, in FIG. 9, one electrode assembly 23 is accommodated in the shell body 21. In this case, only one second abutting surface 2421 that fits at least a portion of the end face 2311 of the main body 231 is formed on the side, facing the main body 231, of the limit portion 242 in the first direction Y. Alternatively, a plurality of electrode assemblies 23 may be accommodated in the shell body 21. Refer to FIG. 11 and FIG. 12. FIG. 11 is a schematic diagram of connection between the first insulating member 24 and the electrode assembly 23 according to other embodiments of the present application, and FIG. 12 is a partial cross-sectional view of the battery cell 20 perpendicular to the thickness direction X of the wall according to other embodiments of the present application. The battery cell 20 includes a plurality of electrode assemblies 23, and the plurality of electrode assemblies 23 are laminated in the second direction Z, where the first direction Y, the second direction Z, and the thickness direction X of the wall are perpendicular to each other. The limit portion 242 has a plurality of second abutting surfaces 2421 arranged in the second direction Z, and each of the second abutting surfaces 2421 abuts against the end face 2311 of one main body 231.

The second direction Z is a laminating direction of the plurality of electrode assemblies 23 and a thickness direction of the electrode assemblies 23. The limit portion 242 has the plurality of second abutting surfaces 2421 arranged in the second direction Z, namely, the plurality of second abutting surfaces 2421 arranged in the second direction Z are formed on the side, facing the main body 231, of the limit portion 242 in the first direction Y. That is, the limit portion 242 has the plurality of second abutting surfaces 2421 arranged in the laminating direction of the electrode assemblies 23, and the end face 2311 of the main body 231 of each electrode assembly 23 is attached to the corresponding second abutting surface 2421.

For example, in FIG. 11 and FIG. 12, two electrode assemblies 23 are configured, the two electrode assemblies 23 are laminated, the end faces 2311 of the two electrode assemblies 23 are arc surfaces, the limit portion 242 has two second contact surfaces 2421 arranged in the second direction Z, and each of the second abutting surfaces 2421 abuts against the end face 2311 of one main body 231.

It should be noted that, in other embodiments, refer to FIG. 13, where FIG. 13 is a partial cross-sectional view of the battery cell 20 perpendicular to the thickness direction X of the wall according to still other embodiments of the present application, the limit portion 242 may alternatively have only one arc-shaped second abutting surface 2421, the end faces 2311 of the main bodies 231 of the plurality of electrode assemblies 23 all abut against the second abutting surface 2421, and the second abutting surface 2421 fits at least a portion of the end face 2311 of the main body 231 of each electrode assembly 23. The limit portion 242 with this structure increases the contact area between the second abutting surface 2421 and the main bodies 231 of the electrode assemblies 23, reduces the manufacturing difficulty of the limit portion 242, and can effectively reduce the assembly difficulty between the limit portion 242 and the electrode assemblies 23.

The battery cell 20 is equipped with a plurality of electrode assemblies 23 arranged in the second direction Z, and the limit portion 242 has a plurality of second abutting surfaces 2421 arranged in the second direction Z, so that each second abutting surface 2421 can abut against at least a portion of the end face 2311 of one main body 231, which enables the limit portion 242 to fit the main bodies 231 of the plurality of electrode assemblies 23, to ensure the contact area between the limit portion 242 and the main bodies 231 of the plurality of electrode assemblies 23, thereby increasing the energy density of the battery cell 20 and effectively reducing the risk of collision between the plurality of electrode assemblies 23 and the shell body 21 of the shell.

According to some embodiments of the present application, as shown in FIG. 6 and FIG. 7, in the thickness direction X of the wall, a portion of the limit portion 242 extending between the main body 231 and the shell body 21 of the shell has a length of Li, and the main body 231 has a length of L₂, satisfying L₁ ≥ 0.05 × L₂.

The portion of the limit portion 242 extending between the main body 231 and the shell body 21 of the shell is a portion of the limit portion 242 that can abut against the main body 231 of the electrode assembly 23. That is, L₁ is the length of the portion of the limit portion 242 that abuts against the main body 231 of the electrode assembly 23 in the thickness direction X of the wall.

It should be noted that the length of the portion of the limit portion 242 extending between the main body 231 and the shell body 21 of the shell may be greater than the length of the main body 231, that is, in the thickness direction X of the wall, the limit portion 242 extends between the main body 231 and the shell body 21 of the shell from an end of the main body 231 close to the end cover 22, and extends out of an end of the main body 231 away from the end cover 22, so that the main body 231 can fully abut against the limit portion 242.

The length of the portion of the limit portion 242 extending between the main body 231 and the shell body 21 of the shell in the thickness direction X of the wall is greater than or equal to 5% of the length of the main body 231 in the thickness direction X of the wall, which can alleviate too small contact area between the limit portion 242 and the main body 231 due to too short limit portion 242, thereby reducing stress concentration between the limit portion 242 and the main body 231 and reducing the risk of partial lithium evolution in the electrode assembly 23 during use.

According to some embodiments of the present application, as shown in FIG. 9, in the first direction Y, a maximum thickness of the limit portion 242 is D₁, satisfying D₁ ≤ 50 mm.

The maximum thickness of the limit portion 242 in the first direction Y is a maximum size occupied by the limit portion 242 in the first direction Y. In FIG. 9, because both the second abutting surface 2421 of the limit portion 242 and the end face 2311 of the main body 231 are arc-shaped, the second abutting surface 2421 with an arc-shaped structure is formed on the side, facing the main body 231, of the limit portion 242 in the first direction Y. That is, the maximum thickness of the limit portion 242 in the first direction Y is the maximum distance between two sides of the limit portion 242 in the first direction Y.

The maximum thickness of the limit portion 242 in the first direction Y is less than or equal to 50 mm, which alleviates excessive space occupation by the limit portion 242 due to the excessive thickness of the limit portion 242, thereby improving space utilization of the electrode assembly 23 in the shell body 21 of the shell to ensure the energy density of the battery cell 20.

According to some embodiments of the present application, as shown in FIG. 9, in the first direction Y, a minimum thickness of the limit portion 242 is D₂, satisfying 0.05 mm ≤ D₂ ≤ 2 mm.

The minimum thickness of the limit portion 242 in the first direction Y is the thickness of a weakest area of the limit portion 242 in the first direction Y. For example, in FIG. 9, because the second abutting surface 2421 of the limit portion 242 is an arc surface, the limit portion 242 has an arc-shaped structure on one side. The minimum thickness of the limit portion 242 in the first direction Y is the minimum distance between the first abutting surface 2412 in the first direction Y and the side, away from the first abutting surface 2412, of the limit portion 242, that is, a narrowest gap is formed between the main body 231 and the shell body 21 of the shell in the first direction Y, and the minimum thickness of the limit portion 242 in the first direction Y is the thickness of a portion of the limit portion 242 within the minimum gap formed between the main body 231 and the shell body 21 of the shell in the first direction Y. Of course, in some embodiments, if the limit portion 242 is of a regular cuboid structure, the minimum thickness of the limit portion 242 in the first direction Y is the thickness of the limit portion 242 in the first direction Y.

The minimum thickness of the limit portion 242 in the first direction Y to 0.05 mm to 2 mm, which can reduce the phenomenon of low structural strength of the limit portion 242 due to too small thickness of the limit portion 242 to reduce the risk of fracture of the limit portion 242 during use, and can alleviate the phenomenon of low space utilization of the electrode assembly 23 in the shell body 21 of the shell due to too large thickness of the limit portion 242 to reduce the impact of the limit portion 242 on the energy density of the battery cell 20.

According to some embodiments of the present application, with continued reference to FIG. 9, in the first direction Y, a minimum distance between the main body 231 and the shell is D₃, and the minimum thickness of the limit portion 242 is D₂, satisfying 0.05 × D₃ ≤ D₂ ≤ 0.95 × D₃.

The minimum distance between the main body 231 and the shell in the first direction Y is the width of the minimum gap formed between the main body 231 and the shell body 21 in the first direction Y. For example, in FIG. 9, because the end face 2311 of the main body 231 is an arc surface, the main body 231 has a structure with an arc-shaped end. The minimum distance between the main body 231 and the shell body 21 of the shell in the first direction Y is the distance between the farthest end of the main body 231 in the first direction Y and the shell body 21 of the shell.

In the first direction Y, the minimum thickness of the limit portion 242 occupies 5% to 95% of the minimum distance between the main body 231 and the shell body 21 of the shell. Because the first abutting surface 2412 of the limit portion 242 and the end face 2311 of the main body 231 are arc surfaces fitting each other, the area of the minimum thickness of the limit portion 242 in the first direction Y is a portion of the limit portion 242 within the minimum gap formed between the main body 231 and an inner wall of the shell body 21 in the first direction Y. That is, the thickness of the limit portion 242 within the minimum gap between the main body 231 and the shell body 21 in the first direction Y is 5% to 95% of the width of the minimum gap. Of course, in other embodiments, if the limit portion 242 is of a regular cuboid structure, the entire limit portion 242 is located within the minimum gap between the main body 231 and the shell body 21 of the shell in the first direction Y, that is, the thickness of the limit portion 242 is 5% to 95% of the width of the minimum gap.

The minimum thickness of the limit portion 242 in the first direction Y is 5% to 95% of the minimum distance between the main body 231 and the shell body 21 of the shell in the first direction Y, that is, the limit portion 242 occupies 5% to 95% of the minimum gap between the main body 231 and the shell body 21 of the shell in the first direction Y, thereby ensuring the structural strength of the limit portion 242 to reduce the risk of fracture of the limit portion 242 during use, alleviating the phenomenon of mutual scratch between the limit portion 242 and the shell body 21 of the shell when the first insulating member 24 is assembled to the shell due to excessive space occupation by the limit portion 242, and then reducing the assembly difficulty of the battery cell 20.

According to some embodiments of the present application, as shown in FIGs. 4, 6, and 7, the battery cell 20 further includes a second insulating member 27. The second insulating member 27 is wrapped on an outer side of the main body 231 to insulate the main body 231 from the shell. In the first direction Y, the portion of the limit portion 242 between the main body 231 and the shell is disposed between the second insulating member 27 and the main body 231.

The portion of the limit portion 242 between the main body 231 and the shell is disposed between the second insulating member 27 and the main body 231, that is, the second insulating member 27 is wrapped on the outer side of the portion of the limit portion 242 that abuts against the main body 231, so that the portion of the limit portion 242 between the main body 231 and the shell is located between the second insulating member 27 and the main body 231.

For example, the second insulating member 27 is an insulating film, which is wrapped on the outer side of the main body 231 to insulate the main body 231 from the shell. The second insulating member 27 may be made of various materials, such as rubber or plastic.

In the process of assembling the battery cell 20, after the first insulating member 24 and the electrode assembly 23 are first connected to each other, the second insulating member 27 is wrapped on the outer side of the main body 231 and the limit portion 242, and then the electrode assembly 23 is placed inside the shell body 21 of the shell.

By wrapping the second insulating member 27 on the outer side of the main body 231, the second insulating member 27 can insulate the main body 231 and the shell to some extent, thereby achieving insulation between the main body 231 and the shell. Moreover, the portion of the limit portion 242 extending between the main body 231 and the shell is disposed between the second insulating member 27 and the main body 231, which improves the structural stability between the limit portion 242 and the main body 231, and facilitates simultaneous assembly of the electrode assembly 23 and the first insulating member 24 into the shell body 21 of the shell to improve the assembly efficiency of the battery cell 20.

According to some embodiments of the present application, the present application further provides a battery 100, including a plurality of battery cells 20 in any of the above solutions.

As shown in FIG. 2, the battery 100 may further include a box 10, and the plurality of battery cells 20 are accommodated in the box 10.

According to some embodiments of the present application, the present application further provides an electrical device, including the battery 100 in any of the above solutions, where the battery 100 is used for providing electrical energy for the electrical device.

The electrical device may be any of the foregoing devices or systems using the battery 100.

According to some embodiments of the present application, as shown in FIGs. 3 to 9, the present application provides a battery cell 20. The battery cell 20 includes a shell body 21, an end cover 22, an electrode assembly 23, and a first insulating member 24. The shell body 21 has an opening 211, the end cover 22 is closed to the opening 211, and two electrode terminals 25 are disposed on the end cover 22. The electrode assembly 23 is accommodated in the shell body 21, the electrode assembly 23 includes a main body 231 and two tabs 232 protruding from one end of the main body 231 in the thickness direction X of the wall, and the two tabs 232 are connected to the two electrode terminals 25 respectively. The first insulating member 24 is accommodated in the shell body 21, the first insulating member 24 includes an insulating body 241 and two limit portions 242, and the insulating body 241 is disposed between the end cover 22 and the electrode assembly 23 in the thickness direction X of the wall to insulate the end cover 22 and the electrode assembly 23. The insulating body 241 has a first abutting surface 2412 that abuts against the main body 231 on a side away from the end cover 22 in the thickness direction X of the wall, and the first abutting surface 2412 is provided with an accommodating groove 2413 for accommodating the tab 232. The two limit portions 242 protrude from the first abutting surface 2412, the two limit portions 242 are located on two sides of the main body 231 respectively in the first direction Y, and at least a portion of the limit portion 242 extends between the main body 231 and the shell body 21 in the thickness direction X of the wall, where the first direction Y is perpendicular to the thickness direction X of the wall. In the first direction Y, the main body 231 has an end face 2311, the limit portion 242 has a second abutting surface 2421 that fits at least a portion of the end face 2311, the second abutting surface 2421 abuts against the end face 2311, and both the end face 2311 and the second abutting surface 2421 are arc surfaces.

It should be noted that the embodiments in the present application and the features of the embodiments may be combined with each other on a non-conflict basis.

Described above are merely preferred embodiments of the present application, and the present application is not limited thereto. Various modifications and variations may be made to the present application for those skilled in the art. Any modifications, equivalent substitutions, improvements, and the like made within the spirit and principle of the present application shall fall within the protection scope of the present application.

## Claims

1. A battery cell, comprising:
a shell having a wall;
an electrode assembly accommodated in the shell, wherein the electrode assembly comprises a main body and a tab, and the tab protrudes from one end of the main body in a thickness direction of the wall; and
a first insulating member accommodated in the shell, wherein the first insulating member comprises an insulating body and a limit portion, the insulating body is disposed between the wall and the electrode assembly in the thickness direction of the wall to insulate the wall and the electrode assembly, the limit portion is connected to the insulating body, at least a portion of the limit portion is located between the main body and the shell in a first direction, and the first direction is perpendicular to the thickness direction of the wall.

2. The battery cell according to claim 1, wherein the shell comprises:
a shell body having an opening; and
an end cover closed to the opening, wherein an electrode terminal is disposed on the end cover, and the electrode terminal is electrically connected to the tab;
wherein the wall is the end cover.

3. The battery cell according to claim 1 or 2, wherein in the thickness direction of the wall, the insulating body has a first abutting surface that abuts against at least a portion of the main body on a side away from the wall, and the limit portion extends between the main body and the shell from the first abutting surface away from the wall.

4. The battery cell according to claim 3, wherein the first abutting surface is provided with an accommodating groove for accommodating the tab.

5. The battery cell according to any one of claims 1-4, wherein the battery cell is of a square structure, and the first direction is a length direction of the wall.

6. The battery cell according to claim 5, wherein the first insulating member comprises:
two limit portions, wherein the two limit portions are located on two sides of the main body respectively in the first direction.

7. The battery cell according to any one of claims 1-6, wherein the limit portion abuts against the main body in the first direction.

8. The battery cell according to claim 7, wherein in the first direction, the main body has an end face, the limit portion has a second abutting surface that fits at least a portion of the end face, and the second abutting surface abuts against the end face.

9. The battery cell according to claim 8, wherein both the end face and the second abutting surface are arc surfaces, and the entire limit portion is located between the shell and the end face in the first direction.

10. The battery cell according to claim 8 or 9, wherein the battery cell comprises a plurality of electrode assemblies, the plurality of electrode assemblies are laminated in a second direction, and the first direction, the second direction, and the thickness direction of the wall are perpendicular to each other; and
the limit portion has a plurality of second abutting surfaces arranged in the second direction, and each of the second abutting surfaces abuts against an end face of one main body.

11. The battery cell according to any one of claims 1-10, wherein in the thickness direction of the wall, a portion of the limit portion extending between the main body and the shell has a length of Li, and the main body has a length of L₂, satisfying L₁ ≥ 0.05 × L₂.

12. The battery cell according to any one of claims 1-11, wherein in the first direction, a maximum thickness of the limit portion is D₁, satisfying D₁ ≤ 50 mm.

13. The battery cell according to any one of claims 1-12, wherein in the first direction, a minimum thickness of the limit portion is D₂, satisfying 0.05 mm ≤ D₂ ≤ 2 mm.

14. The battery cell according to any one of claims 1-13, wherein in the first direction, a minimum distance between the main body and the shell is D₃, and a minimum thickness of the limit portion is D₂, satisfying 0.05 × D₃ ≤ D₂ ≤ 0.95 × D₃.

15. The battery cell according to any one of claims 1-14, wherein the battery cell further comprises:
a second insulating member wrapped on an outer side of the main body to insulate the main body from the shell;
wherein in the first direction, a portion of the limit portion between the main body and the shell is disposed between the second insulating member and the main body.

16. A battery, comprising a plurality of battery cells according to any one of claims 1-15.

17. An electrical device, comprising the battery according to claim 16.
